(19) Europäisches Patentamt
European Patent Office
Office européen des brevets

(11) **EP 4 303 831 A1**

(12) **EUROPEAN PATENT APPLICATION**

(43) Date of publication:
**10.01.2024 Bulletin 2024/02**

(21) Application number: **23173902.0**

(22) Date of filing: **17.05.2023**

(51) International Patent Classification (IPC):
**G06V 20/52** (2022.01)  **G06V 40/10** (2022.01)
**G06T 7/70** (2017.01)  **G06V 10/74** (2022.01)
**G06V 10/82** (2022.01)

(52) Cooperative Patent Classification (CPC):
**G06V 20/52; G06T 7/70; G06V 10/761;
G06V 10/82; G06V 40/103;** G06T 2207/30196

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.07.2022  JP 2022107825**

(71) Applicant: **FUJITSU LIMITED
Kawasaki-shi, Kanagawa 211-8588 (JP)**

(72) Inventor: **AWAI, Shuji
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **VERIFICATION PROGRAM, VERIFICATION METHOD, AND INFORMATION PROCESSING APPARATUS**

(57)    A verification program causes a computer to execute a process including, acquiring an image captured by a camera, estimating, based on skeleton recognition of a person included in the acquired image, a chronological position of a skeleton of the person, estimating a first height of the person based on a parameter of the camera, correcting the estimated position of the skeleton of the person by using the estimated first height of the person and a first pixel length to be a reference per pixel constituting the image and performing verification of the person based on the corrected chronological position of the skeleton of the person.

## FIG.1

EP 4 303 831 A1

**Description**

FIELD

The embodiment discussed herein is related to a verification program and the like.

BACKGROUND

Images captured by a camera are used for various kinds of investigation, and can be important information. For example, when the police investigate a person subject to investigation, tracking of the person and the like are performed by analyzing footage from cameras arranged at multiple positions, and by checking based on characteristics of the person. If the face of the person, the clothes and hair of the person are used as the characteristics of the person, the verification accuracy is reduced when the footage is unclear. Accordingly, the gait verification technique is used.

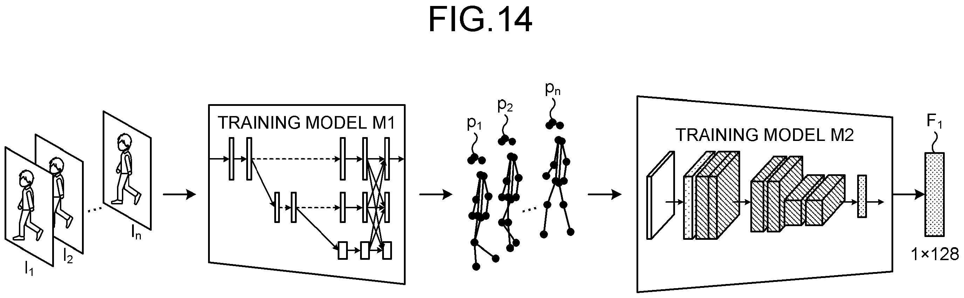

FIG. 14 is a diagram for explaining a conventional gait verification technique. An apparatus that performs the conventional gait verification technique is denoted as "conventional apparatus" herein. The conventional apparatus inputs chronological frames $I_1$, $I_2$, ..., $I_n$ included in footage of a person into a training model M1, and thereby estimates chronological skeleton information $p_1$, $p_2$, ..., $p_n$.

In the skeleton information $p_1$ to $p_n$, plural joint coordinates are given. The conventional apparatus inputs the chronological skeleton information $p_1$ to $p_n$ into the training model M2, to calculate a feature amount $F_1$ of the person. The feature amount $F_1$ is a 128-dimensional vector, and a single piece of the feature amount $F_1$ is calculated from footage (the chronological frames $I_1$, $I_2$, ..., $I_n$) of a single person. The training models M1, M2 are trained in advance by using training data.

The conventional apparatus performs the processing explained in FIG. 14 for each person, to calculate a feature amount of each person. The conventional apparatus identifies the same person based on a similarity of the feature amount of each person. For example, a similarity between a feature amount of footage of a first person captured by a camera of a first location and a feature amount of a second person of footage captured by a camera of a second location is equal to or higher than a threshold, the first person and the second person are identified as the same person (Japanese Laid-open Patent Publication Nos. 2020-77017, 2022-65241).

However, the conventional gait verification technique described above has a problem that the verification accuracy is reduced if verification is performed based on a condition of a person not included in training data used in training of the training model M1. The condition of a person includes a condition, such as a size of a person, a position at which a person walks, and the like.

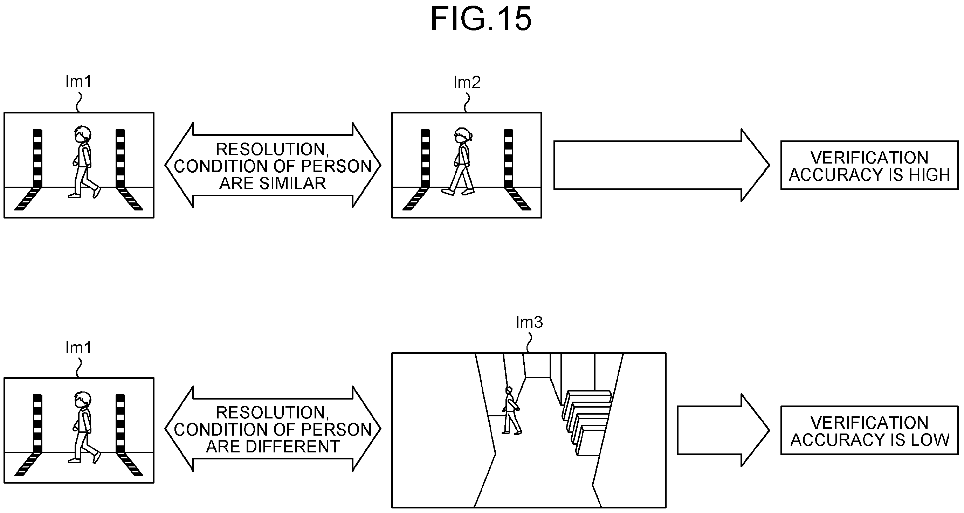

FIG. 15 is a diagram for explaining a problem in the conventional technique. For example, suppose that training data is training data Im1. Suppose that the resolution of the training data Im1 is "320×240". Suppose that data subject to verification is verification subject data Im2, Im3. Suppose that the resolution of the reification subject data Im2 is "320×240" and the resolution of the verification subject data Im3 is "1280×720".

The resolution and the condition of a person of the verification subject data Im2 are similar to the resolution and the condition of a person of the training data Im1. In this case, when the conventional apparatus inputs the verification subject data Im2 into the training model M1, an appropriate feature amount is calculated, and the verification accuracy is increased.

On the other hand, the resolution and the condition of a person of the verification subject data Im3 are significantly different from the resolution and the condition of a person of the training data Im1. Therefore, when the conventional apparatus inputs the verification subject data Im3 into the training model M1, an appropriate feature amount is not calculated, and the verification accuracy is reduced.

Accordingly, it is an object in one aspect of an embodiment of the present invention to provide a verification program, a verification method, and an information processing apparatus that enable to improve the verification accuracy.

SUMMARY

According to an aspect of an embodiment, a verification program causes a computer to execute a process including, acquiring an image captured by a camera, estimating, based on skeleton recognition of a person included in the acquired image, a chronological position of a skeleton of the person, estimating a first height of the person based on a parameter of the camera, correcting the estimated position of the skeleton of the person by using the estimated first height of the person and a first pixel length to be a reference per pixel constituting the image and performing verification of the person based on the corrected chronological position of the skeleton of the person.

BRIEF DESCRIPTION OF DRAWINGS

FIG. 1 is a diagram illustrating a verification system according to the present embodiment;
FIG. 2 is a diagram for explaining preprocessing;
FIG. 3 is a diagram Part 1 for explaining correction processing;
FIG. 4 is a diagram Part 2 for explaining the correction processing;
FIG. 5 is a functional block diagram illustrating a configuration of an information processing apparatus according to the present embodiment;
FIG. 6 is a diagram illustrating an example of a data structure of an image buffer;
FIG. 7 is a diagram illustrating an example of a data structure of reference setting information;
FIG. 8 is a diagram illustrating an example of a data structure of a parameter table;
FIG. 9 is a diagram illustrating an example of a data structure of a feature amount DB;
FIG. 10 is a flowchart illustrating a processing procedure at training of the information processing apparatus according to the present embodiment;
FIG. 11 is a flowchart illustrating a processing procedure at verification of the information processing apparatus according to the present embodiment;
FIG. 12 is a flowchart illustrating a processing procedure of verification processing according to the present embodiment;
FIG. 13 is a diagram illustrating an example of a hardware configuration of a computer that implements a function similar to that of the information processing apparatus of an embodiment;
FIG. 14 is a diagram for explaining a conventional gait verification technique; and
FIG. 15 is a diagram for explaining a problem of the conventional technique.

DESCRIPTION OF EMBODIMENT(S)

Preferred embodiments of the present invention will be explained with reference to accompanying drawings. The embodiments are not intended to limit the present invention.

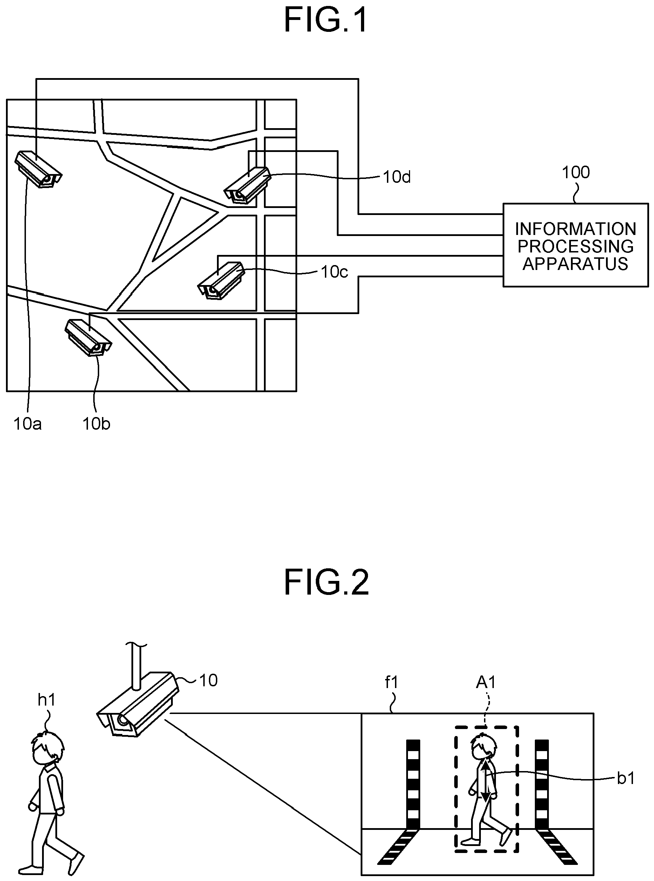

First, one example of a verification system according to the present embodiment will be explained. FIG. 1 is a diagram illustrating the verification system according to the present embodiment. As illustrated in FIG. 1, this verification system includes cameras 10a, 10b, 10c, and 10d, and an information processing apparatus 100. The cameras 10a to 10d and the information processing apparatus 100 are connected to one another wirelessly or wiredly. Although not illustrated, the verification system may further include other cameras.

The cameras 10a to 10d are a camera that captures an image within an imaging range. The cameras 10a to 10d are arranged at respectively different positions. In the following explanation, camera 10 is used to denote the cameras 10a to 10d when not particularly distinguished from one another.

The camera 10 transmits data of a captured image to the information processing apparatus 100. In the following explanation, the data of an image are denoted as "image data". The image data includes chronological frames. The frame is a still image that is captured by the camera 10 at one moment. Respective frames are given with frame numbers in chronological order. Moreover, the image data is given with camera identification information to identify the camera 10 that has captured the image data.

The information processing apparatus 100 estimates chronological skeleton information of a person shown in the image data, and calculates a feature amount of the person based on the chronological skeleton information. Furthermore, the information processing apparatus 100 performs verification of a person based on a feature amount of each person.

The information processing apparatus 100 performs preprocessing and correction processing to improve the verification accuracy of a person. Hereinafter, one example of the preprocessing and the correction processing will be explained.

First, the preprocessing performed by the information processing apparatus 100 will be explained. FIG. 2 is a diagram for explaining the preprocessing. The information processing apparatus 100 captures image data (chronological frames) of a person h1, the height of which is known by the camera 10, and identifies an area A1 of the person from a frame f1.

The information processing apparatus 100 identifies a length in pixels of a body part b1 of the person in the identified area A1. In the following explanation, the height of the person h1 that has been known is denoted as "reference height". Moreover, the length in pixels of the body part b1 of the area of the person of the frame f1, which is the frame f1 included in the image data capturing the person h1 by the camera 10 is denoted as "reference pixel length".

The information processing apparatus 100 performs position estimation of the camera 10 based on the image data captured by the camera 10, and calculates a parameter of the camera 10. For example, the parameter of the camera 10 includes a height, an angle, a focal length, and the like of the camera 10.

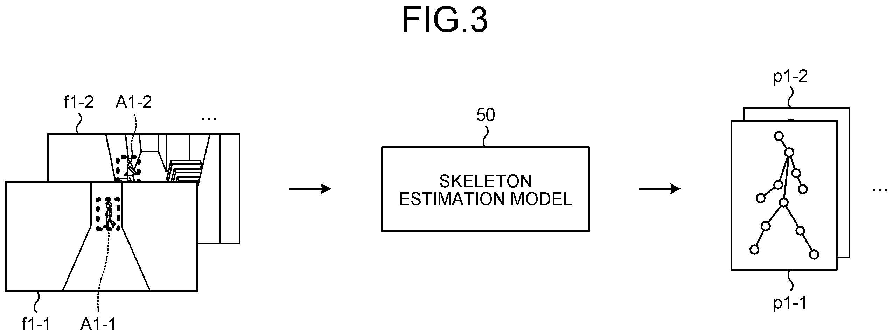

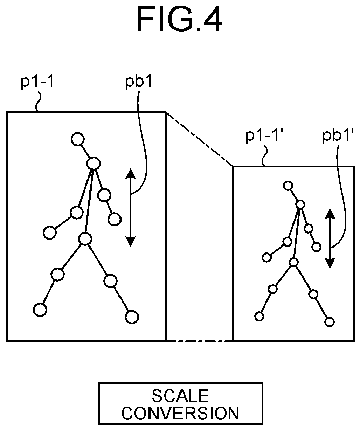

Subsequently, the correction processing performed by the information processing apparatus 100 will be explained. FIG. 3 and FIG. 4 are diagrams for explaining the correction processing. FIG. 3 will be explained. For example, the information processing apparatus 100 identifies an area A1-1 of a person shown in the frame f1-1 captured by the camera 10, and estimates the height of the person of the area A1-1 based on the parameter of the camera 10. In the following explanation, a height of a person estimated from an area of a person in a frame is denoted as "estimated height".

The information processing apparatus 100 inputs the frame f1-1 into a trained skeleton estimation model 50, to estimate skeleton information p1-1. The skeleton estimation model 50 is a neural network (NN) that receives a frame (still image) as an input, and produces skeleton information of a person as an output.

Proceeding to explanation of FIG. 4, a case in which correction of the skeleton information p1-1 that has been estimated by inputting the frame f1-1 into the skeleton estimation model 50 is performed will be explained. Skeleton information subjected to correction is referred to as corrected skeleton information p1-1'. A body length (length in pixels) of a body part pb1' of the corrected skeleton information p1-1' is denoted as "subject pixel length".

The information processing apparatus 100 identifies the subject pixel length that satisfies "Condition 1" described below.

```
Reference height:estimated height=reference pixel length:subject

pixel length                              Condition 1
```

The information processing apparatus 100 converts the scale of the skeleton information p1-1 so that the pixel length of the body part pb1 of the skeleton information p1-1 is to be the subject pixel length, to generate the corrected skeleton information p1-1'. The pixel length of the body part pb1' of the corrected skeleton information p1-1' is to be the reference pixel length. For example, the information processing apparatus 100 calculates a correction value obtained by dividing the subject pixel length by the pixel length of the body part pb1 of the skeleton information p1-1, and acquires values obtained by multiplying lengths of respective joints of the skeleton information p1-1 by the correction value, as lengths of respective joints after scale conversion.

The information processing apparatus 100 identifies an area A1-2 of a person similarly for a frame f1-2 also, and estimates an estimated height of the area A1-2 based on the parameter of the camera 10. Moreover, the information processing apparatus 100 estimates skeleton information p1-2 by inputting the frame f1-2 into the skeleton estimation model 50, and converts the scale.

Because the information processing apparatus 100 performs the preprocessing and the correction processing described above, even when the resolution and a condition of a person of input data are significantly different from the resolution and a condition of a person of training data, appropriate skeleton information can be estimated. For example, by the scale conversion explained in FIG. 4, displacement of a coordinate range of each input data can be corrected.

The information processing apparatus 100 can improve the verification accuracy by calculating a feature amount of a person based on chronological skeleton information subjected to the correction processing.

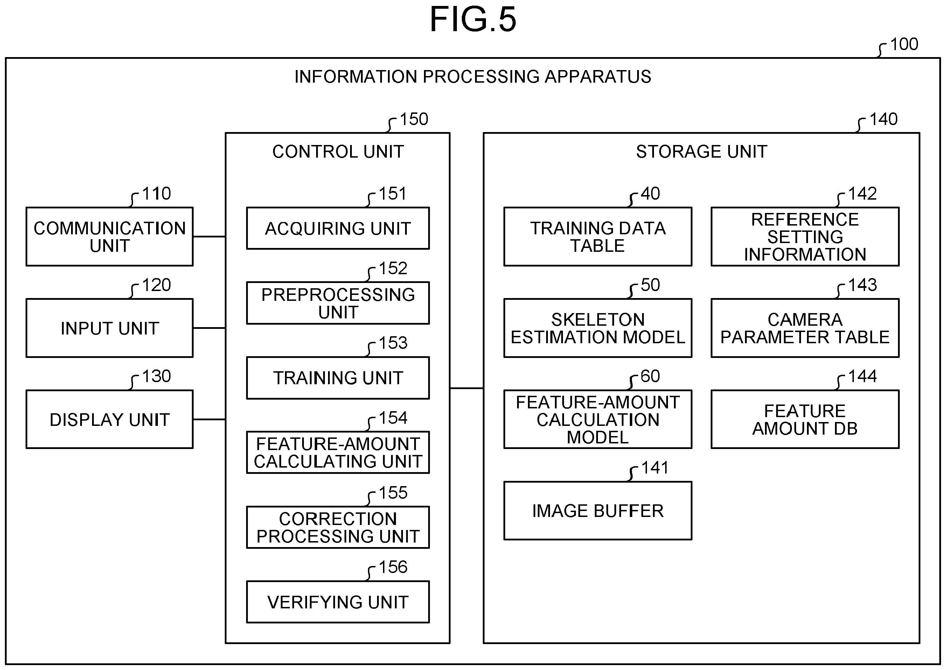

Next, a configuration example of the information processing apparatus 100 that performs the processing described above will be explained. FIG. 5 is a functional block diagram illustrating a configuration of an information processing apparatus according to the present embodiment. As illustrated in FIG. 5, the information processing apparatus 100 includes a communication unit 110, an input unit 120, a display unit 130, a storage unit 140, and a control unit 150.

The communication unit 110 performs data communication with the camera 10, an external device, and the like through a network. For example, the communication unit 110 receives image data from the camera 10.

The input unit 120 inputs various kinds of information to the control unit 150 in response to an input operation by a user.

The display unit 130 displays information output from the control unit 150.

The storage unit 140 has a training data table 40, the skeleton estimation model 50, a feature-amount calculation model 60, an image buffer 141, reference setting information 142, a camera parameter table 143, and a feature amount database (DB) 144. The storage unit 140 is a semiconductor memory device, such as a random access memory (RAM) and a flash memory, a hard disk, an optical disk, or the like.

A training data table 40a is a table that holds plural pieces of training data to train the feature-amount calculation model 60. For example, training data of the training data table 40 is training data in which chronological frames (still images) of a person are input data, and a feature amount of the person is a ground truth label. In the present embodiment, by inputting chronological frames into the trained skeleton estimation model 50, chronological skeleton information is estimated, and uses the chronological skeleton information as an input to the feature-amount calculation model 60. In the present embodiment, chronological frames used as input data for the training data are image data captured by the camera 10a.

The skeleton estimation model 50 is a model that receives a frame as a input, and that produces skeleton information of a person included in the frame as a output. The skeleton estimation model 50 is an NN or the like. In the skeleton information of a person, respective joints of a person, and two-dimensional coordinates of the respective joints are set. The skeleton estimation model 50 is supposed to be a trained model.

The feature-amount calculation model 60 is a model that receives chronological skeleton information as an input and that produces a feature amount of a person as an output.

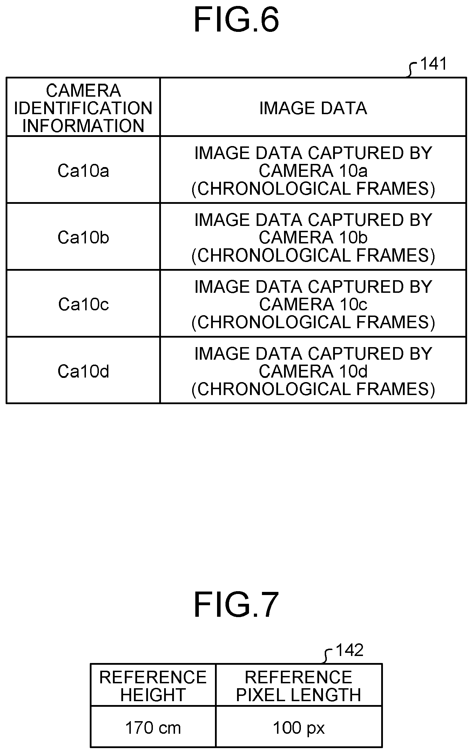

The image buffer 141 stores image data captured by the camera 10. FIG. 6 is a diagram illustrating an example of a data structure of the image buffer. As illustrated in FIG. 6, the image buffer 141 associates the camera identification information and the image data. The camera identification information is information to identify the respective cameras 10a to 10d. For example, the identification information of the camera 10a is referred to as camera identification information C10a. The identification information of the camera 10b is referred to as camera identification information C10b. The identification information of the camera 10c is referred to as camera identification information C10c. The identification information of the camera 10d is referred to as camera identification information CI0d. The image data is image data captured by the camera 10, and includes chronological frames (still images). The respective frames are given with chronological frame numbers.

The reference setting information 142 includes information about the reference height identified by the preprocessing explained in FIG. 2, and information about the reference pixel length. FIG. 7 is a diagram illustrating an example of a data structure of the reference setting information. As illustrated in FIG. 7, the reference setting information 142 associates the reference height and the reference pixel length. The reference height and the reference pixel length are common among the cameras 10.

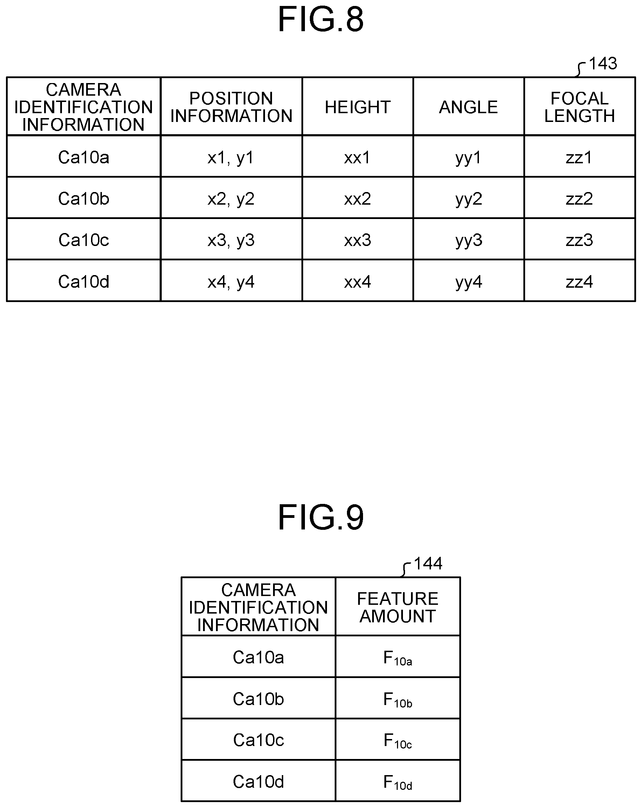

The camera parameter table 143 holds parameters of the camera 10. FIG. 8 is a diagram illustrating an example of a data structure of the parameter table. The camera identification information is associated with position information, a height, an angle, and a focal length of the camera 10. In the position information of the camera 10, a longitude, a latitude, and the like at which the camera 10 is installed are set. A height, an angle, and a focal length are parameters of the camera 10. In the present embodiment, the angle is an angle of depression of the camera 10 but, not limited thereto, it may be any angle of pan, tilt, roll, and the like.

The feature amount DB 144 is a table that holds a feature amount calculated based on image data of the respective cameras 10. FIG. 9 is a diagram illustrating an example of a data structure of the feature amount DB. As illustrated in FIG. 9, the feature amount DB 144 associates the camera identification information and a feature amount. The feature amount is a feature amount that is calculated by inputting the chronological skeleton information estimated from image data into the feature-amount calculation model 60.

Returning back to explanation of FIG. 5, the control unit 150 includes an acquiring unit 151, a preprocessing unit 152, a training unit 153, a feature-amount calculating unit 154, a correction processing unit 155, and a verifying unit 156. The control unit 150 is an integrated circuit, such as a central processing unit (CPU) and a micro processing unit (MPU).

The acquiring unit 151 acquires image data from the camera 10. The acquiring unit 151 registers the acquired image data in the image buffer 141, associating with the camera identification information.

The preprocessing unit 152 performs the preprocessing described above. For example, the preprocessing unit 152 accepts input of the "reference setting information 142" from the input unit 120 operated by a user. In the reference setting information 142, the reference height explained in FIG. 7 and the reference pixel length are set. The preprocessing unit 152 registers the accepted reference setting information 142 in the storage unit 140.

Moreover, the preprocessing unit 152 performs position estimation of the camera 10a (calibration of a camera) based on image data captured by the camera 10a, and calculates a parameter (height, angle, focal length) of the camera 10a. The preprocessing unit 152 may use any technique to calculate the parameter of the camera 10a. For example, the preprocessing unit 152 calculates a parameter based on a literature, Yoshioka, T., Awai, S., and Konno, T. "Improving Person Re-Identification Based on Human Height Information", 2021 International Conference on Engineering and Emerging Technologies (ICEET).

The preprocessing unit 152 registers camera identification information "Ca10a", a height, an angle, and a focal length, which are calculation results of the parameters, and the position information of the camera 10a input by a user that operates the input unit 120 in the camera parameter table 143.

Also for the cameras 10b to 10d, the preprocessing unit 152 calculates parameters of the cameras 10b to 10d by performing the processing described above, and registers the calculation results in the camera parameter table 143.

Although a case in which information to be registered in the camera parameter table 143 is generated by performing the processing described above by the preprocessing unit 152 has been explained, it is not limited thereto. For example, the preprocessing unit 152 may receive the camera parameter table 143 in which information has already been registered, through the input unit 120, the communication unit 110, and the like, to store in the storage unit 140.

The training unit 153 trains the feature amount calculation model 60 by using the training data registered in the training data table 40. The training unit 153 estimates the chronological skeleton information by inputting input data (chronological frames) of the training data sequentially into the skeleton estimation model 50. The training unit 153 extracts an area of a person from a frame, and inputs the extracted area into the skeleton estimation model 50.

The estimated chronological skeleton information is corrected by the correction processing unit 155 described later. The training unit 153 trains the feature-amount calculation model 60 such that a feature amount at the time of input of the corrected chronological skeleton information into the feature-amount calculation model 60 is approximated to a ground truth label of the training data. For example, the training unit 153 trains the feature-amount calculation model 60 based on the error back propagation algorithm.

The feature-amount calculating unit 154 acquires image data (chronological frames) stored in the image buffer 141, and inputs the chronological frames sequentially into the skeleton estimation model 50, and thereby estimates chronological skeleton information. The feature-amount calculating unit 154 extracts an area of a person from a frame, and inputs the extracted area into the skeleton estimation model 50.

The estimated chronological skeleton information is corrected by the correction processing unit 155 described later. The feature-amount calculating unit 154 inputs the corrected chronological skeleton information into the feature-amount calculation model 60, and thereby calculates a feature amount of the person of the image data captured by the camera 10. The feature-amount calculating unit 154 calculates a feature amount by performing the processing described above for each of the image data captured by the cameras 10a to 10d, and registers the calculated feature amount in the feature amount DB 144, associating with the camera identification information. The feature-amount calculation model 60 used by the feature-amount calculating unit 154 is supposed to have been trained by the training unit 153.

The correction processing unit 155 performs correction processing explained in FIG. 3 and FIG. 4. First, the correction processing performed by the correction processing unit 155 in collaboration with the training unit 153 will be explained.

As described above, the training unit 153 estimates skeleton information by inputting a frame of the training data into the skeleton estimation model 50. When it is supposed that the camera that has captured the frame of the training frame is the camera 10a, the correction processing unit 155 acquires a parameter (height, angle, focal length) corresponding to the camera identification information "Ca10a" from the camera parameter table 143. The correction processing unit 155 acquires the reference height and the reference pixel length common among the cameras 10 from the reference setting information 142.

The correction processing unit 155 identifies an area of a person included in the frame of the training data, and estimates an estimated height of the person of the identified area based on the parameter of the camera 10a. The correction processing unit 155 identifies a subject pixel that satisfies Condition 1 based on the reference height, the estimated height, and the reference pixel length. The correction processing unit 155 performs scale conversion of the skeleton information estimated by inputting the frame of the training data into the skeleton estimation model 50 based on the subject pixel length. The correction processing unit 155 repeats the processing described above also for skeleton information generated from other frames of the training data, and performs scale conversion of the chronological skeleton information.

Subsequently, the correction processing that is performed by the correction processing unit 155 in collaboration with the feature-amount calculating unit 154 will be explained.

As described above, the feature-amount calculating unit 154 estimates skeleton information by inputting image data (frame) captured by the camera 10 into the skeleton estimation model 50. The skeleton information that is estimated by image data (frame) captured by the camera 10a will herein be explained. The correction processing unit 155 acquires a parameter (height, angle, focal length) corresponding to the camera identification information "Ca10a" from the camera parameter table 143. The correction processing unit 155 acquires the reference height and the reference pixel length from the reference setting information 142.

The correction processing unit 155 identifies an area of a person included in a frame of the image data, and estimates an estimated height of the person of the identified area based on the parameter of the camera 10a. The correction processing unit 155 identifies a subject pixel length that satisfies Condition 1 based on the reference height, the estimated height, and the reference pixel length. The correction processing unit 155 performs scale conversion of the skeleton information estimated by inputting the frame of the image data into the skeleton estimation model 50 based on the subject pixel length. The correction processing unit 155 repeats the processing described above also for skeleton information generated from other frames of the image data that is captured by the camera 10a, and corrects the chronological skeleton information.

The correction processing unit 155 performs similar processing to the processing described above also for chronological skeleton information estimated from image data captured by the other cameras 10b to 10d, and thereby performs scale conversion of the chronological skeleton information.

The verifying unit 156 performs processing described below when designation of a person subject to investigation is received from an input device operated by a user. In the following explanation, a person subject to investigation is denoted as "subject person". For example, when camera identification information of a camera that has captured the subject person is accepted, the verifying unit 156 identifies a feature amount corresponding to the accepted camera identification information based on the feature amount DB 144. The identified feature amount is denoted as "subject feature amount".

The verifying unit 156 calculates cosine similarities between the subject feature amount and other feature amounts respectively in the feature amount DB 144, and identifies the other feature amount, the cosine similarity of which is equal to or higher than a threshold. The identified other feature amount is denoted as "identified feature amount". The verifying unit 156 identifies camera identification information corresponding to the identified feature amount as identification information of the camera that has captured the subject person, and extracts image data corresponding to the identified camera identification information from the image buffer 141. The verifying unit 156 may output the extracted image data to the display unit 130, or may transmit to an external device through a network.

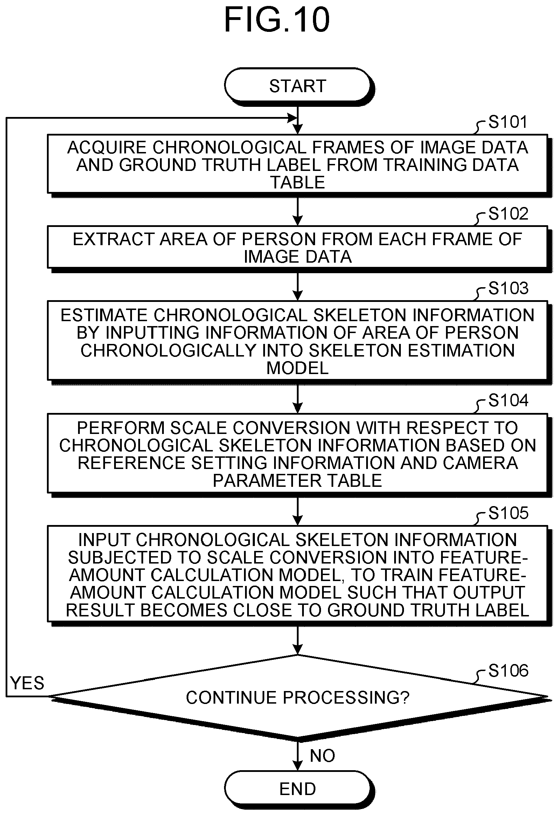

Next, one example of a processing procedure of the information processing apparatus 100 according to the present embodiment will be explained. FIG. 10 is a flowchart illustrating a processing procedure at the time of training of the information processing apparatus according to the present embodiment. As illustrated in FIG. 10, the information processing apparatus 100 acquires chronological frames of image data from the training data table 40 (step S101).

The training unit 153 extracts an area of a person from each of the frames of the image data (step S102). The training unit 153 estimates chronological skeleton information by inputting information of the area of the person chronologically into the skeleton estimation model 50 (step S103).

The correction processing unit 155 of the information processing apparatus 100 performs scale conversion with respect to the chronological skeleton information based on the reference setting information 142 and the camera parameter table 143 (step S104). The training unit 153 inputs the chronological skeleton information subjected to the scale conversion into the feature-amount calculation model 60, to train the feature-amount calculation model 60 such that an output result is approximated to a ground truth label (step S105).

The training unit 153 shifts to step S101 when the processing is to be continued (step S106: YES). The training unit 153 ends the processing when the processing is not to be continued (step S106: NO).

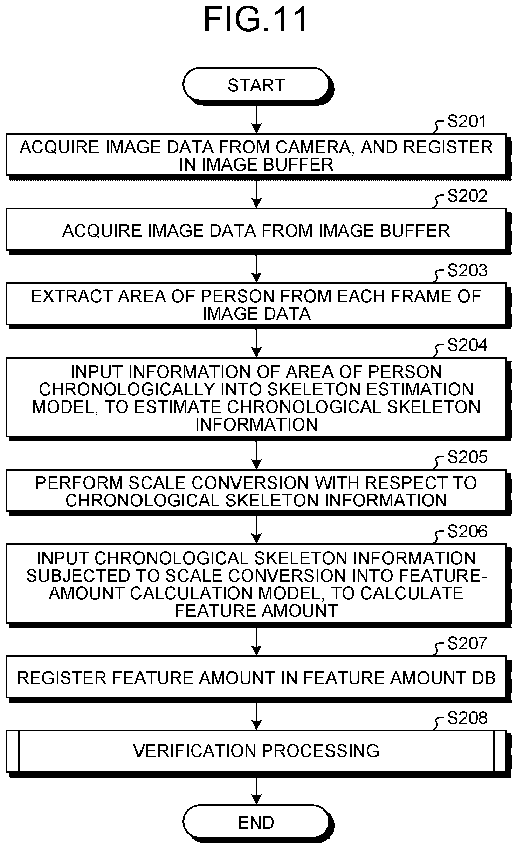

FIG. 11 is a flowchart illustrating a processing procedure at the time of verification of the information processing apparatus according to the present embodiment. As illustrated in FIG. 11, the acquiring unit 151 of the information processing apparatus 100 acquires image data from the camera 10, and registers in the image buffer 141 (step S201).

The feature-amount calculating unit 154 acquires image data from the image buffer 141 (step S202). The feature-amount calculating unit 154 extracts an area of a person from each of frames of the image data (step S203). The feature-amount calculating unit 154 estimates chronological skeleton information by inputting information of the area of the person chronologically into the skeleton estimation model 50 (step S204).

The correction processing unit 155 of the information processing apparatus 100 performs scale conversion with respect to the chronological skeleton information based on the reference setting information 142 and the camera parameter table 143 (step S205).

The feature-amount calculating unit 154 inputs the chronological skeleton information subjected to the scale conversion into the feature-amount calculation model 60, to calculate a feature amount (step S206).

The feature-amount calculating unit 154 registers the feature amount in the feature amount DB 144 (step S207). The verifying unit 156 of the information processing apparatus 100 performs verification processing (step S208).

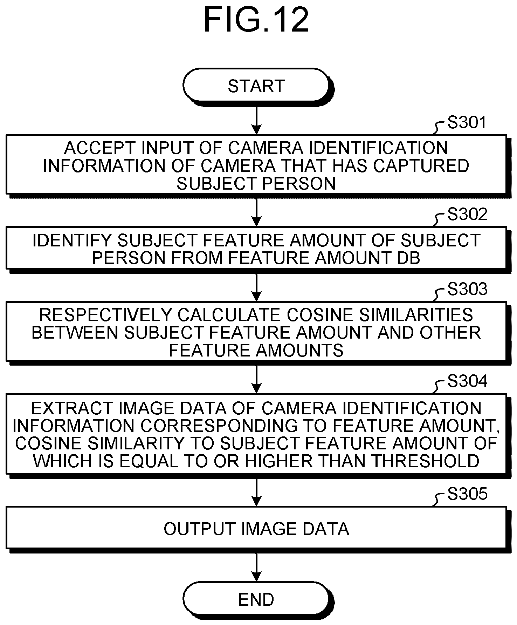

Next, one example of the verification processing indicated at step S208 in FIG. 11 will be explained. FIG. 12 is a flowchart illustrating a processing procedure of the verification processing according to the present embodiment. As illustrated in FIG. 12, the verifying unit 156 of the information processing apparatus 100 accepts an input of camera identification information of the camera 10 that has captured a subject person (step S301).

The verifying unit 156 identifies a subject feature amount of the subject person from the feature amount DB 144 (step S302). The verifying unit 156 respectively calculates a cosine similarity between the subject feature amount and other feature amounts (step S303).

The verifying unit 156 extracts image data of the camera identification information corresponding to a feature amount, the cosine similarity to the subject feature amount of which is equal to or higher than a threshold from the image buffer 141 (step S304). The verifying unit 156 outputs the extracted image data to the display unit 130 (step S305).

Next, an effect of the information processing apparatus 100 according to the present embodiment will be explained. The information processing apparatus 100 corrects skeleton information estimated by inputting frames of the image data into the skeleton estimation model based on the reference setting information 142 and the camera parameter table 143, and calculates a feature amount by inputting the corrected chronological skeleton information into the feature-amount calculation model 60. Thus, even when the resolution and a condition of a person of a frame are significantly different from the resolution and a condition of a person of the training data, appropriate skeleton information can be estimated. For example, by the scale conversion explained in FIG. 4, displacement of a coordinate range of each input data can be corrected.

The information processing apparatus 100 can improve the verification accuracy by calculating a feature amount of a person based on chronological skeleton information subjected to the correction processing.

The information processing apparatus 100 respectively calculates cosine similarities between a subject feature amount of a subject person registered in the feature amount DB 144 and other feature amounts, and extracts image data of camera identification information corresponding to a feature amount, the cosine similarity of which is equal to or higher than a threshold. Thus, image data relating to the subject person can be provided.

The information processing apparatus 100 corrects the skeleton information estimated by inputting the frame of the training data into the skeleton estimation model based on the reference setting information 142 and the camera parameter table 143, and trains the feature-amount calculation model 60 by using the corrected chronological skeleton information. Thus, the accuracy of skeleton information to be input to the feature-amount calculation model 60 can be improved, and training of the feature-amount calculation model 60 can be appropriately performed.

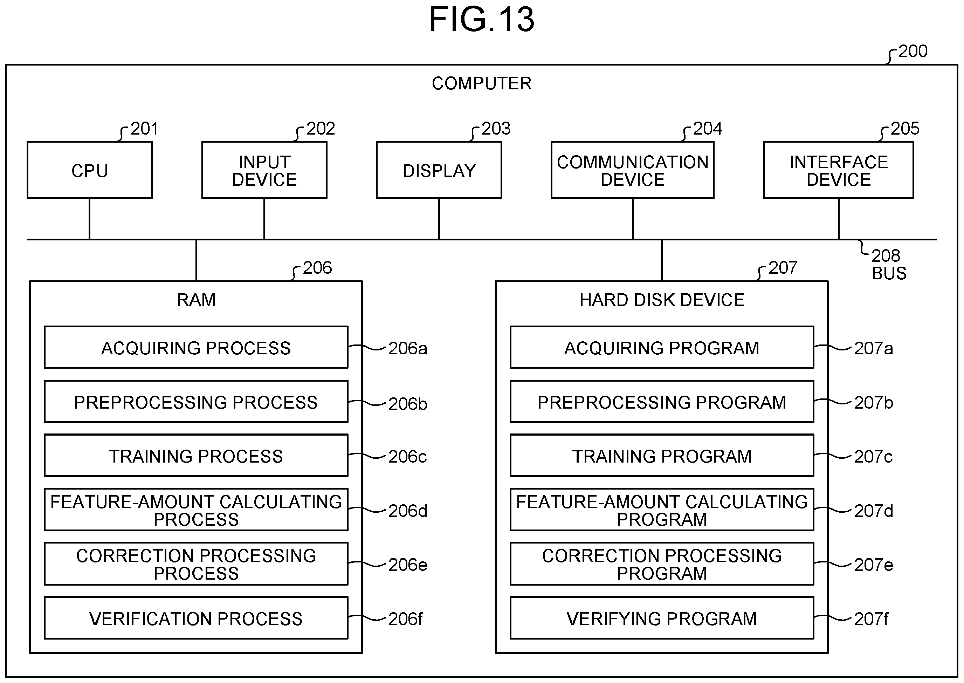

Next, one example of a hardware configuration of a computer that implements a functions similar to that of the information processing apparatus 100 described in the above embodiment will be explained. FIG. 13 is a diagram illustrating an example of the hardware configuration of the computer that implements a function similar to that of the information processing apparatus according to the embodiment.

As illustrated in FIG. 13, a computer 200 includes a CPU 201 that performs various kinds of arithmetic processing, an input device 202 that accepts an input of data from a user, and a display 203. Moreover, the computer 200 includes a communication device 204 that communicates data with an external device and the like through a wired or wireless network, and an interface device 205. Furthermore, the computer 200 includes a RAM 206 that temporarily stores various kinds of information, and a hard disk device 207. The respective devices 201 to 207 are connected to a bus 208.

The hard disk device 207 includes an acquiring program 207a, a preprocessing program 207b, a training program 207c, a feature-amount calculating program 207d, a correction processing program 207e, and a verifying program 207f. Moreover, the CPU 201 reads the respective programs 207a to 207f and expands them on the RAM 206.

The acquiring program 207a functions as an acquiring process 206a. The preprocessing program 207b functions as a preprocessing process 206b. The training program 207c functions as a training process 206c. The feature-amount calculating program 207d functions as a feature-amount calculation process 206d. The correction processing program 207e functions as a correction processing process 206e. The verifying program 207f functions as a verification process 206f.

Processing of the acquiring process 206a corresponds to the processing of the acquiring unit 151. Processing of the preprocessing process 206b corresponds to the processing of the preprocessing unit 152. Processing of the training process 206c corresponds to the processing of the training unit 153. Processing of the feature-amount calculating process 206d corresponds to the processing of the feature-amount calculating unit 154. Processing of the correction processing process 206e corresponds to the processing of the correction processing unit 155. Processing of the verification process 206f corresponds to the processing of the verifying unit 156.

The respective programs 207a to 207f are not necessarily stored in the hard disk device 207 from the beginning. For example, the respective programs may be stored in a "portable physical medium", such as a flexible disk (FD), a compact-disk read-only memory (CD-ROM), a digital versatile disk (DVD), a magneto-optical disk, and an IC card, that is inserted into the computer 200, and the computer 200 may read and execute the respective programs 207a to 207f.

The verification accuracy can be improved.

**Claims**

1. A verification program that causes a computer to execute a process comprising:

    acquiring an image captured by a camera;
    estimating, based on skeleton recognition of a person included in the acquired image, a chronological position of a skeleton of the person;
    estimating a first height of the person based on a parameter of the camera;
    correcting the estimated position of the skeleton of the person by using the estimated first height of the person and a first pixel length to be a reference per pixel constituting the image; and
    performing verification of the person based on the corrected chronological position of the skeleton of the person.

2. The verification program according to claim 1, wherein the process further includes:

    acquiring a second height of a person, and a second pixel length of a body part of the person included in an image;
    identifying the first pixel length of a body portion of the person included in the image, the first pixel length being a reference per pixel constituting the image;
    identifying a first pixel length with which a ratio between the first height and the second height and a ratio between the first pixel length and the second pixel length become same ratio; and

correcting a position of the skeleton of the person based on the identified first pixel length.

3. The verification program according to claim 2, wherein the process further includes:

estimating a third height of a person included in an image of training data based on the parameter of the camera;
identifying a third pixel length of a body part of the person included in the image of the training data, the third pixel length being a reference per pixel constituting the image of the training data;
identifying a third pixel length with which a ratio between the second height and the third height and a ratio between the second pixel length and the third pixel length become same ratio; and
correcting a position of the skeleton of the person estimated from the training data based on the identified third pixel length.

4. The verification program according to claim 2 or 3, wherein the process further includes:

acquiring images of different angles of depression that are captured respectively by a plurality of cameras, installation positions of which differ from one another;
setting a person subject to investigation from the acquired images captured respectively by the cameras; and
extracting, based on a chronological position of a skeleton of the set person subject to investigation, and chronological positions of a skeleton of a person included in images captured by the respective cameras, an image that includes the person subject to investigation from among the images captured by the respective cameras.

5. A verification method that is performed by a computer, comprising:

acquiring an image captured by a camera;
estimating, based on skeleton recognition of a person included in the acquired image, a chronological position of a skeleton of the person;
estimating a first height of the person based on a parameter of the camera;
correcting the estimated position of the skeleton of the person by using the estimated first height of the person and a first pixel length to be a reference per pixel constituting the image; and
performing verification of the person based on the corrected chronological position of the skeleton of the person.

6. The verification method according to claim 5, further including

acquiring a second height of a person, and a second pixel length of a body part of the person included in an image, wherein;
identifying the first pixel length of a body portion of the person included in the image, the first pixel length being a reference per pixel constituting the image;
identifying a first pixel length with which a ratio between the first height and the second height and a ratio between the first pixel length and the second pixel length become same ratio; and
correcting a position of the skeleton of the person based on the identified first pixel length.

7. The verification method according to claim 6, further including:

estimating a third height of a person included in an image of training data based on the parameter of the camera;
identifying a third pixel length of a body part of the person included in the image of the training data, the third pixel length being a reference per pixel constituting the image of the training data;
identifying a third pixel length with which a ratio between the second height and the third height and a ratio between the second pixel length and the third pixel length become same ratio; and
correcting a position of the skeleton of the person estimated from the training data based on the identified third pixel length.

8. The verification method according to claim 6 or 7, further including:

acquiring images of different angles of depression that are captured respectively by a plurality of cameras, installation positions of which differ from one another;
setting a person subject to investigation from the acquired images captured respectively by the cameras; and
extracting, based on a chronological position of a skeleton of the set person subject to investigation, and chronological positions of a skeleton of a person included in images captured by the respective cameras, an image that includes the person subject to investigation from among the images captured by the respective cameras.

9. An information processing apparatus comprising:
   a control unit(150) configured to:

   acquire an image captured by a camera,
   estimate, based on skeleton recognition of a person included in the acquired image, a chronological position of a skeleton of the person;
   estimate a first height of the person based on a parameter of the camera;
   correct the estimated position of the skeleton of the person by using the estimated first height of the person and a first pixel length to be a reference per pixel constituting the image; and
   perform verification of the person based on the corrected chronological position of the skeleton of the person.

10. The information processing apparatus according to claim 9, wherein the control unit(150) is further configured to:

    acquire a second height of a person, and a second pixel length of a body part of the person included in an image;
    identify the first pixel length of a body portion of the person included in the image, the first pixel length being a reference per pixel constituting the image;
    identify a first pixel length with which a ratio between the first height and the second height and a ratio between the first pixel length and the second pixel length become same ratio; and
    correct a position of the skeleton of the person based on the identified first pixel length.

11. The information processing apparatus according to claim 10, wherein the control unit(150) is further configured to:

    estimate a third height of a person included in an image of training data based on the parameter of the camera;
    identify a third pixel length of a body part of the person included in the image of the training data, the third pixel length being a reference per pixel constituting the image of the training data;
    identify a third pixel length with which a ratio between the second height and the third height and a ratio between the second pixel length and the third pixel length become same ratio; and
    correct a position of the skeleton of the person estimated from the training data based on the identified third pixel length.

12. The information processing apparatus according to claim 11 or 12, wherein the control unit(150) is further configured to:

    acquire images of different angles of depression that are captured respectively by a plurality of cameras, installation positions of which differ from one another;
    set a person subject to investigation from the acquired images captured respectively by the cameras; and
    extract, based on a chronological position of a skeleton of the set person subject to investigation, and chronological positions of a skeleton of a person included in images captured by the respective cameras, an image that includes the person subject to investigation from among the images captured by the respective cameras.

# FIG.1

# FIG.2

# FIG.3

# FIG.4

SCALE
CONVERSION

# FIG.5

INFORMATION PROCESSING APPARATUS — 100

CONTROL UNIT — 150

- ACQUIRING UNIT — 151
- PREPROCESSING UNIT — 152
- TRAINING UNIT — 153
- FEATURE-AMOUNT CALCULATING UNIT — 154
- CORRECTION PROCESSING UNIT — 155
- VERIFYING UNIT — 156

COMMUNICATION UNIT — 110

INPUT UNIT — 120

DISPLAY UNIT — 130

STORAGE UNIT — 140

- TRAINING DATA TABLE — 40
- SKELETON ESTIMATION MODEL — 50
- FEATURE-AMOUNT CALCULATION MODEL — 60
- IMAGE BUFFER — 141
- REFERENCE SETTING INFORMATION — 142
- CAMERA PARAMETER TABLE — 143
- FEATURE AMOUNT DB — 144

EP 4 303 831 A1

# FIG.6

141

| CAMERA IDENTIFICATION INFORMATION | IMAGE DATA |
|---|---|
| Ca10a | IMAGE DATA CAPTURED BY CAMERA 10a (CHRONOLOGICAL FRAMES) |
| Ca10b | IMAGE DATA CAPTURED BY CAMERA 10b (CHRONOLOGICAL FRAMES) |
| Ca10c | IMAGE DATA CAPTURED BY CAMERA 10c (CHRONOLOGICAL FRAMES) |
| Ca10d | IMAGE DATA CAPTURED BY CAMERA 10d (CHRONOLOGICAL FRAMES) |

# FIG.7

142

| REFERENCE HEIGHT | REFERENCE PIXEL LENGTH |
|---|---|
| 170 cm | 100 px |

# FIG.8

143

| CAMERA IDENTIFICATION INFORMATION | POSITION INFORMATION | HEIGHT | ANGLE | FOCAL LENGTH |
|---|---|---|---|---|
| Ca10a | x1, y1 | xx1 | yy1 | zz1 |
| Ca10b | x2, y2 | xx2 | yy2 | zz2 |
| Ca10c | x3, y3 | xx3 | yy3 | zz3 |
| Ca10d | x4, y4 | xx4 | yy4 | zz4 |

# FIG.9

144

| CAMERA IDENTIFICATION INFORMATION | FEATURE AMOUNT |
|---|---|
| Ca10a | $F_{10a}$ |
| Ca10b | $F_{10b}$ |
| Ca10c | $F_{10c}$ |
| Ca10d | $F_{10d}$ |

# FIG.10

START

**S101**

ACQUIRE CHRONOLOGICAL FRAMES OF IMAGE DATA AND GROUND TRUTH LABEL FROM TRAINING DATA TABLE

**S102**

EXTRACT AREA OF PERSON FROM EACH FRAME OF IMAGE DATA

**S103**

ESTIMATE CHRONOLOGICAL SKELETON INFORMATION BY INPUTTING INFORMATION OF AREA OF PERSON CHRONOLOGICALLY INTO SKELETON ESTIMATION MODEL

**S104**

PERFORM SCALE CONVERSION WITH RESPECT TO CHRONOLOGICAL SKELETON INFORMATION BASED ON REFERENCE SETTING INFORMATION AND CAMERA PARAMETER TABLE

**S105**

INPUT CHRONOLOGICAL SKELETON INFORMATION SUBJECTED TO SCALE CONVERSION INTO FEATURE-AMOUNT CALCULATION MODEL, TO TRAIN FEATURE-AMOUNT CALCULATION MODEL SUCH THAT OUTPUT RESULT BECOMES CLOSE TO GROUND TRUTH LABEL

**S106**

YES ← CONTINUE PROCESSING?

NO

END

# FIG.11

START

**ACQUIRE IMAGE DATA FROM CAMERA, AND REGISTER IN IMAGE BUFFER** — S201

**ACQUIRE IMAGE DATA FROM IMAGE BUFFER** — S202

**EXTRACT AREA OF PERSON FROM EACH FRAME OF IMAGE DATA** — S203

**INPUT INFORMATION OF AREA OF PERSON CHRONOLOGICALLY INTO SKELETON ESTIMATION MODEL, TO ESTIMATE CHRONOLOGICAL SKELETON INFORMATION** — S204

**PERFORM SCALE CONVERSION WITH RESPECT TO CHRONOLOGICAL SKELETON INFORMATION** — S205

**INPUT CHRONOLOGICAL SKELETON INFORMATION SUBJECTED TO SCALE CONVERSION INTO FEATURE-AMOUNT CALCULATION MODEL, TO CALCULATE FEATURE AMOUNT** — S206

**REGISTER FEATURE AMOUNT IN FEATURE AMOUNT DB** — S207

**VERIFICATION PROCESSING** — S208

END

# FIG.12

```
            ┌─────────────┐
            │    START    │
            └─────────────┘
                   │
                   ▼                          ┌S301
┌────────────────────────────────────────────────┐
│   ACCEPT INPUT OF CAMERA IDENTIFICATION          │
│ INFORMATION OF CAMERA THAT HAS CAPTURED          │
│              SUBJECT PERSON                       │
└────────────────────────────────────────────────┘
                   │
                   ▼                          ┌S302
┌────────────────────────────────────────────────┐
│  IDENTIFY SUBJECT FEATURE AMOUNT OF SUBJECT      │
│      PERSON FROM FEATURE AMOUNT DB               │
└────────────────────────────────────────────────┘
                   │
                   ▼                          ┌S303
┌────────────────────────────────────────────────┐
│  RESPECTIVELY CALCULATE COSINE SIMILARITIES      │
│ BETWEEN SUBJECT FEATURE AMOUNT AND OTHER         │
│              FEATURE AMOUNTS                      │
└────────────────────────────────────────────────┘
                   │
                   ▼                          ┌S304
┌────────────────────────────────────────────────┐
│ EXTRACT IMAGE DATA OF CAMERA IDENTIFICATION      │
│ INFORMATION CORRESPONDING TO FEATURE AMOUNT,     │
│ COSINE SIMILARITY TO SUBJECT FEATURE AMOUNT OF   │
│ WHICH IS EQUAL TO OR HIGHER THAN THRESHOLD       │
└────────────────────────────────────────────────┘
                   │
                   ▼                          ┌S305
┌────────────────────────────────────────────────┐
│              OUTPUT IMAGE DATA                    │
└────────────────────────────────────────────────┘
                   │
                   ▼
            ┌─────────────┐
            │     END     │
            └─────────────┘
```

# FIG.13

COMPUTER 200

| | | | | |
|---|---|---|---|---|
| CPU 201 | INPUT DEVICE 202 | DISPLAY 203 | COMMUNICATION DEVICE 204 | INTERFACE DEVICE 205 |

208 BUS

**RAM 206**

- ACQUIRING PROCESS 206a
- PREPROCESSING PROCESS 206b
- TRAINING PROCESS 206c
- FEATURE-AMOUNT CALCULATING PROCESS 206d
- CORRECTION PROCESSING PROCESS 206e
- VERIFICATION PROCESS 206f

**HARD DISK DEVICE 207**

- ACQUIRING PROGRAM 207a
- PREPROCESSING PROGRAM 207b
- TRAINING PROGRAM 207c
- FEATURE-AMOUNT CALCULATING PROGRAM 207d
- CORRECTION PROCESSING PROGRAM 207e
- VERIFYING PROGRAM 207f

# FIG.14

EP 4 303 831 A1

# FIG.15

Im1 — RESOLUTION, CONDITION OF PERSON ARE SIMILAR — Im2 ⟹ VERIFICATION ACCURACY IS HIGH

Im1 — RESOLUTION, CONDITION OF PERSON ARE DIFFERENT — Im3 ⟹ VERIFICATION ACCURACY IS LOW

EP 4 303 831 A1

Europäisches
Patentamt

European
Patent Office

Office européen
des brevets

**EUROPEAN SEARCH REPORT**

Application Number

EP 23 17 3902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/084677 A1 (NEC CORP [JP]) 6 May 2021 (2021-05-06) * the whole document * & US 2022/383653 A1 (YOSHIDA NOBORU [JP] ET AL) 1 December 2022 (2022-12-01) * figure 19 * * paragraph [0084] * * paragraph [0090] * * paragraph [0108] * * paragraph [0132] - paragraph [0134] * * paragraph [0137] - paragraph [0139] * ----- | 1-12 | INV. G06V20/52 G06V40/10 G06T7/70 G06V10/74 G06V10/82 |

TECHNICAL FIELDS
SEARCHED      (IPC)

G06V
G06T

The present search report has been drawn up for all claims

| Place of search | Date of completion of the search | Examiner |
|---|---|---|
| The Hague | 14 September 2023 | Martinez, Francis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 3902

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2023

| Patent document cited in search report | | Publication date | Patent family member(s) | | Publication date |
|---|---|---|---|---|---|
| WO 2021084677 | A1 | 06-05-2021 | CN | 114616588 A | 10-06-2022 |
| | | | EP | 4053791 A1 | 07-09-2022 |
| | | | JP | WO2021084677 A1 | 06-05-2021 |
| | | | US | 2022383653 A1 | 01-12-2022 |
| | | | WO | 2021084677 A1 | 06-05-2021 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020077017 A

- JP 2022065241 A

**Non-patent literature cited in the description**

- **YOSHIOKA, T. ; AWAI, S. ; KONNO, T.** Improving Person Re-Identification Based on Human Height Information. *2021 International Conference on Engineering and Emerging Technologies (ICEET)*